# EUROPEAN PATENT SPECIFICATION

(11) **EP 0 987 838 B1**
(45) Date of publication and mention of the grant of the patent: **22.12.2004**
(21) Application number: 98117714.0
(22) Date of filing: 18.09.1998
(51) Int. Cl.: H04B 7/08, H04B 7/06, H01Q 3/24

(54) **Mobile station employing directional antennas**
Mobilstation mit Richtantennen
Station mobile avec des antennes directionnelles

(43) Date of publication of application: 22.03.2000
(73) Proprietor: ROBERT BOSCH GMBH, 70442 Stuttgart (DE)
(72) Inventor: Knudsen, Jasper, 9210 Aalborg (DK); Vejlgaard, Benny, 9229 Aalborg (DK)

(56) References cited:
- EP-A- 0 289 384
- EP-A- 0 352 787
- DE-A- 4 140 741
- PATENT ABSTRACTS OF JAPAN vol. 095, no. 008, 29 September 1995 & JP 07 135492 A (NIPPON TELEGR & TELEPH CORP), 23 May 1995
- PATENT ABSTRACTS OF JAPAN vol. 015, no. 506 (E-1148), 20 December 1991 & JP 03 220825 A (TOYOTA MOTOR CORP), 30 September 1991

## Description

### Prior art

The invention proceeds from a mobile station in accordance with the generic class of the independent patent claim.

EP-A-0 352 787 discloses the features of the preamble of claim 1.

It is already known from the German patent application DE 197 23 331 published on 10.12.1998, that a mobile station comprises an antenna arrangement with an antenna element which is able to radiate in two different radiation patterns.

### Advantages of the invention

The mobile station having the characterizing features of the independent patent claim has the advantage that at least two antenna elements with a directional radiation pattern, respectively, are provided at the antenna arrangement, that each directional radiation pattern covers a different radiation sector, that for signal reception the at least two antenna elements are activated, that measurement means are provided to measure signal quality parameters at each of the at least two antenna elements at signal reception, and that evaluation means are provided to select at least one radiation sector and to activate the corresponding antenna element for signal transmission in this radiation sector dependent on the measurement of the signal quality parameters at signal reception. On this way the radiation sector or direction which allows signal reception from a base station at best signal quality may be selected for transmission of signals to the base station using a directional radiation pattern for covering this radiation sector. Therefore, the radiation from the mobile station to adjacent and unwanted base stations will be reduced in comparison with an omnidirectional radiation from the mobile station and thereby would substantially reduce the interference with these adjacent or unwanted base stations, and thus substantially increase the uplink capacity of a corresponding cellular mobile communication system.

Such a directional radiation pattern also allows reduced power consumption in the mobile station in comparison with the power consumption of an omnidirectional radiation pattern. Supposing that the directional gain of the directional radiation of the antenna element is greater than the overall power loss of the omnidirectional radiation pattern of an omnidirectional antenna, the difference between this directional gain and the overall power loss may be used to reduce the transmit power of the mobile station.

A further advantage of the use of a directional radiation pattern instead of an omnidirectional radiation pattern consists in a reduced radio frequency radiation towards the user. The possibility to direct the radio frequency radiation outwards from the user's head when the mobile station is performing a hand portable voice connection will reduce the radio frequency radiation towards the user.

It is very advantageous that the evaluation means selects all antenna elements for signal transmission in case that the measured signal strength at each antenna element at signal reception lies below a predetermined value for a predetermined time and/or in case that the difference between the measured time delays at the antenna element at signal reception lies below a predetermined value for a predetermined time. In this way, an omnidirectional radiation pattern may be realized for signal transmission from the mobile station in cases where no privileged radiation direction may be found or where a relatively bad signal quality at signal reception requires an omnidirectional radiation pattern for signal transmission. Therefore, a sufficient number of radiation directions will be provided to ensure the signal transmission from the mobile station to the corresponding base station.

The features of the dependent claims enable further improvement of the invention.

Another advantage consists in a filter which is provided for smoothing the measured signal strengths and/or time delays at signal reception. In this way, the selection of the antenna element for signal transmission having the best signal quality at signal reception does not depend on short term changes of the measured parameters. Therefore, the frequency of switching between the antenna elements may be reduced, whereby switching losses may be prevented and power for switching processes may be saved.

### Drawings

An example of the invention is shown in the figures and explained in greater detail in the description below. Figure 1 shows a block diagram of a mobile station according to the invention, figure 2 shows a first example of transmission ways between a base station and a mobile station, figure 3 shows a second example of transmission ways between a base station an a mobile station, figure 4 shows a measurement diagram of an unfiltered and a filtered signal strength measurement, figure 5 shows measurement diagrams of filtered time delay and signal strength measurements, and figure 6 shows an algorithm for the evaluation means of the mobile station.

### Description

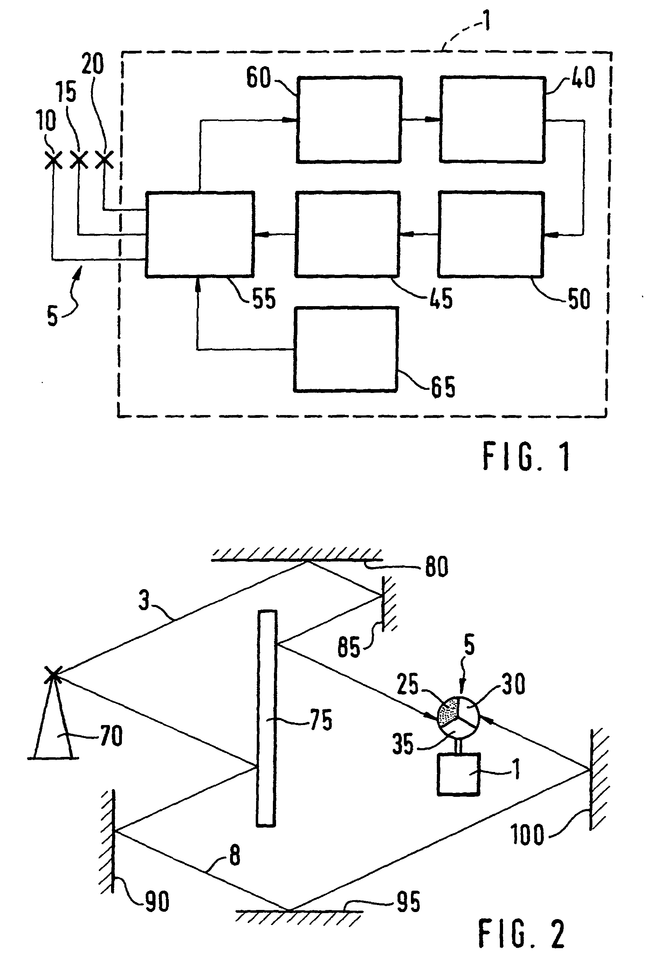

In figure 1 designates 1 a mobile station which may be for example a mobile phone. The mobile station 1 comprises a switch 55 to connect an antenna arrangement 5 to the mobile station 1, the antenna arrangement 5 comprising a first antenna element 10, a second antenna element 15, and a third antenna element 20. Via the switch 55, the first antenna element 10, the second antenna element 15, and the third antenna element 20 are connectable to a receiver 60. The first antenna element 10, the second antenna element 15, and the third antenna element 20 are connectable via the switch 55 also to a transmitter 65. The mobile station 1 comprises also a measurement means 40 which is connected to an evaluation means 45 via a filter 50. The measurements means 40 gets the received signals from the receiver 60. The evaluation means 45 controls the switch 55.

For signal reception, all antenna elements 10, 15, 20 are activated and alternately connected to the receiver 60 via the switch 55. In the measurements means 40, the signal quality of the received signals of each antenna element 10, 15, 20 is measured. The measured signal quality of each antenna element 10, 15, 20 is smoothened by a filter 50 and evaluated by the evaluation means 45. The evaluation means 45 selects the antenna element with the best signal quality at signal reception and controls the switch 55 such that the antenna element with the best signal quality at signal reception is connected to the transmitter 65. The transmitter 65 then transmits signals via the antenna element having the best signal quality at signal reception.

Normally, signals are transmitted between a base station 70 and the mobile station 1. Thereby, the base station 70 spans up a cell in which the mobile station 1 moves. The cell makes part of a cellular mobile telecommunication system covering a geographic area with telecommunication cells, whereby each telecommunication cell comprises at least one base station. The antenna elements 10, 15, 20 have a directional radiation pattern, respectively. Thereby, each directional radiation pattern covers a different radiation sector 25, 30, 35 as can be seen in figure 2. The different radiation sectors 25, 30, 35 are adjacent and arranged such that each possible radiation direction falls into one of these radiation sectors 25, 30, 35.

Figure 2 shows as an example a first transmission way 3 and a second transmission way 8 for signals transmitted from the base station 70 to the mobile station 1. As can be seen in figure 2, a first wall 75 is placed between the base station 70 and the mobile station 1 such that there is no line of sight between the base station 70 and the mobile station 1. Therefore, no direct transmission way between the base station 70 and the mobile station 1 is possible. As can be seen in figure 2, signals which are transmitted from the base station 70 to the mobile station 1 on the first transmission way 3 are reflected on a second wall 80 above the first wall 75, on a third wall 85 which lies on a line between the first wall 75 and the mobile station 1, and on that side of the first wall 75 which is turned towards the mobile station 1 before being received in a first radiation sector 25 by the antenna arrangement 5 of the mobile station 1. Thereby, the first radiation sector 25 is provided by the first antenna element 10, the second radiation sector 30 is provided by the second antenna element 15, and the third radiation sector 35 is provided by the third antenna element 20. Therefore, the signal transmitted from the base station 70 to the mobile station 1 on the first transmission way 3 is received by the first antenna element 10 of the mobile station 1.

Signals from the base station 70 are also transmitted to the mobile station 1 on the second transmission way 8, whereby those signals are first reflected on that side of the first wall 75 which is turned towards the base station 70. Then the signals of the second transmission way 8 are reflected on a fourth wall 90 on a line between the base station 70 and the first wall 75, on a fifth wall 95 below the first wall 75, and a sixth wall 100 on that side of the mobile station 1 which is opposite to the first wall 75, before entering the second radiation sector 30. Therefore, signals which are transmitted on the second transmission way 8 from the base station 70 to the mobile station 1 are received via the second antenna element 15. As can be seen in figure 2, the second transmission way 8 is longer than the first transmission way 3. Therefore, the signals of the second transmission way 8 reach the antenna arrangement 5 with a greater time delay as the signals transmitted on the first transmission way 3.

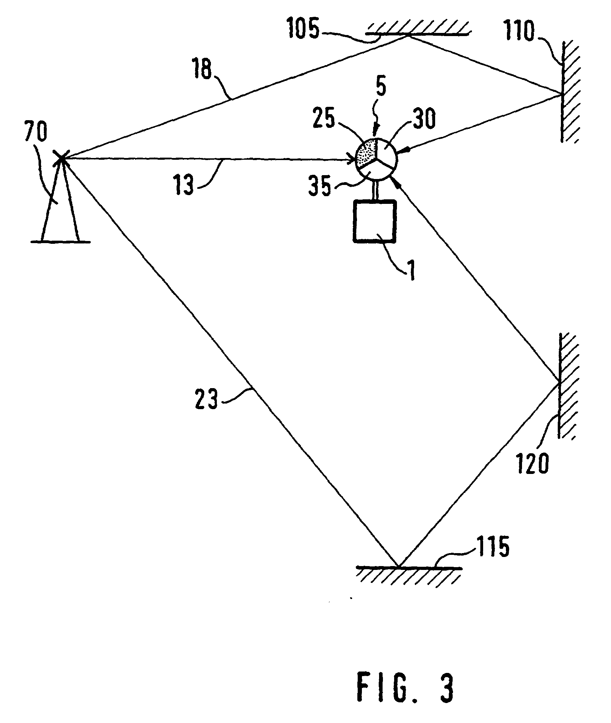

According to figure 3 an example of signal transmission between the base station 70 and the mobile station 1 is described without any wall between the base station 70 and the mobile station 1 such that there is a line of sight between the base station 70 and the mobile station 1. In the line of sight between the base station 70 and the mobile station 1, signals are transmitted from the base station 70 to the mobile station 1 via a third transmission way 13 directly and reach the antenna arrangement 5 at the first radiation sector 25 and therefore are received by the first antenna element 10. According to figure 3, signals are also transmitted from the base station 70 to the mobile station 1 via a fourth transmission way 18. The signals transmitted from the base station 70 on the fourth transmission way 18 are reflected on a seventh wall 105 above the mobile station 1 and on an eighth wall 110 on that side of the mobile station 1 which is opposite to the base station 70, before entering the second radiation sector 30 of the antenna arrangement 5. The signals transmitted on the fourth transmission way 18 are therefore received by the second antenna element 15. According to figure 3, signals may also be transmitted from the base station 70 to the mobile station 1 via a fifth transmission way 23. Thereby, the signals transmitted from the base station 70 on the fifth transmission way 23 are reflected on a ninth wall 115 below the mobile station 1 and on a tenth wall 120 on that side of the mobile station 1 which is opposite to the base station 70, before entering the third radiation sector 35 of the antenna arrangement 5. Therefore, the signals transmitted on the fifth transmission way 23 are received by the third antenna element 20.

As can be seen in figure 3, the signals transmitted on the third transmission way 13 reach the antenna arrangement 5 with the smallest time delay and the signals transmitted on the fifth transmission way 23 reach the antenna arrangement 5 with the highest time delay. According to figure 2 and to figure 3, the first radiation sector 25 is darkened. That means, that the first radiation sector 25 in both examples is selected for signal transmission from the mobile station 1 to the base station 70 because the evaluation means 45 determined best signal quality at signal reception on the first transmission way 3 according to figure 2 and on the third transmission way 13 according to figure 3.

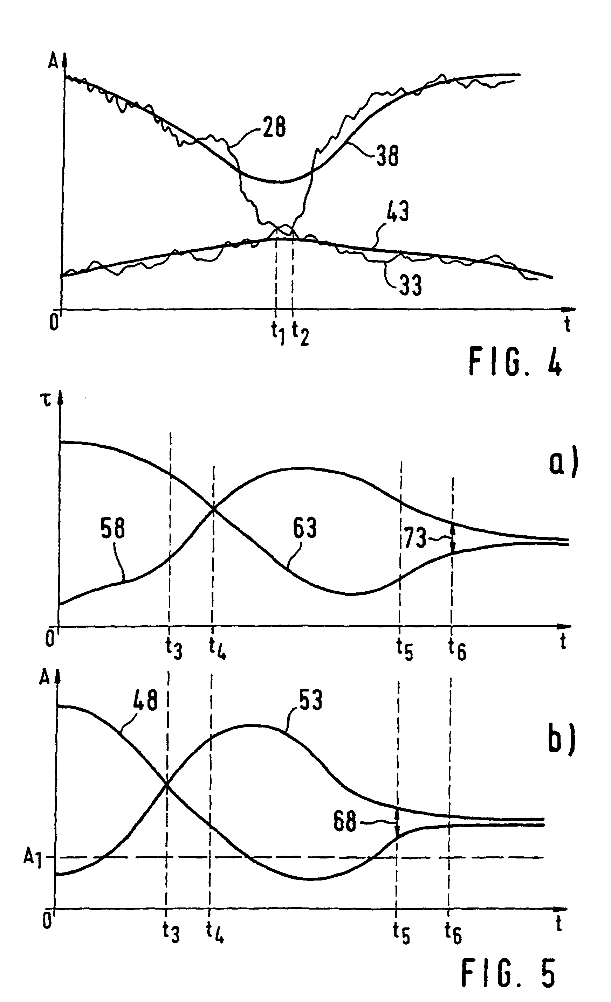

In the following, two examples for measurement of signal quality parameters at the measurement means 40 are described. According to figure 4, the measurement means 40 measures as a signal quality parameter the signal strength of the received signal at each receiving antenna element 10, 15, 20. For simplification, only the measurement results of the first antenna element 10 and the second antenna element 15 are shown in a measurement diagram of figure 4 which shows the signal strength or amplitude A dependent on the time t. At the measurement means 40 a first signal strength 28 is measured for signals received at the first antenna element 10 and a second signal strength 33 is measured for signals received at the second antenna element 15. Thereby, the first signal strength 28 is higher than the second signal strength 33 except between a first time t₁ and a second time t₂, where the second signal strength 33 is higher than the first signal strength 28. The time interval from the first time t₁ to the second time t₂ is relatively short. As the evaluation means 45 selects the antenna element for signal transmission from the mobile station 1 which has the highest signal strength at signal reception, the first antenna element 10 would be selected for signal transmission from the mobile station 1 all the time except the time interval from the first time t₁ to the second time t₂ where the second antenna element 15 will be selected for signal transmission, supposed that at signal reception the signal strength of the third antenna element 20, which is not shown in the diagram of figure 4, lies below the second signal strength 33 all the time. As the time interval between the first time t₁ and the second time t₂ is relatively small, switching between the first antenna element 10 and the second antenna element 15 may be prevented if the measured signal strengths 28, 33 are smoothened by the filter 50. Figure 4 shows a first filtered signal strength 38 and a second smoothened signal strength 43 in the diagram of the signal strength A dependent on the time t. The first filtered signal strength 38 thereby is the smoothened first signal strength 28 and the second filtered signal strength 43 is the smoothened second signal strength 33. As it can be seen in figure 4, the filtering process provides smoothened signal strengths which do not overlap and therefore do not require any switching between the first antenna element 10 and the second antenna element 15 because the first filtered signal strength 38 is always higher than the second filtered signal strength 43 according to the example of figure 4 such that the first antenna element 10 is always selected for signal transmission from the mobile station 1 to the base station 70. According to the measurement results of figure 4, the evaluation means 45 selects the first radiation sector 25 and thereby activates the corresponding first antenna element 10 for signal transmission in the first radiation sector 25 from the mobile station 1 to the base station 70.

It is also possible to measure in the measurements means 40 as a signal quality parameter the time delay of signal reception at each receiving antenna element 10, 15, 20. Differences in the signal strength and/or in the time delay of the signals received at each radiation sector 25, 30, 35 of the antenna arrangement 5 result from a movement of the mobile station 1 in the cellular mobile telecommunication system, especially in the cell of the base station 70. The differences in signal strength and/or time delay between the different antenna elements 10, 15, 20 at signal reception result from multipath reception illustrated according to figure 2 and figure 3.

Figure 5 (b) shows a second example of a signal strength measurement diagram, where a third filtered signal strength 48 and a fourth filtered signal strength 53 is shown. The third filtered signal strength 48 relates to a signal strength of a signal received at the first antenna element 10 and the fourth filtered signal strength 53 relates to a signal strength from a signal received at the second antenna element 15. For reasons of simplification, the filtered signal strength of the third antenna element 20 is not shown in figure 5 (b) . From t = 0 to a third time t₃, the third filtered signal strength 48 is higher than the fourth filtered signal strength 53 and for t > t₃ the fourth filtered signal strength 53 is higher than the third filtered signal strength 48. In the diagram of figure 5 (b), a predetermined signal strength A₁ is shown. If during a predetermined time interval the filtered signal strengths of all antenna elements 10, 15, 20 at signal reception lied below the predetermined signal strength A₁, the evaluation means 45 selects all antenna elements 10, 15, 20 for signal transmission, thereby ensuring an omnidirectional radiation pattern. To prevent high switching frequency in the switch 55, it could be provided, that this selection of all antenna elements 10, 15, 20 for signal transmission as well as the change between two antenna elements for signal transmission is only realized if the measurement condition required for switching is kept up for a predetermined time.

Figure 5 (a) shows a diagram of a time delay measurement, whereby a time delay τ is shown dependent on the time t. The time delay τ of multipath signal reception at the different antenna elements 10, 15, 20 could be measured in relation to the fastest signal transmission or the shortest transmission way. In figure 5 (a) it is shown in absolute values for signals received at the first antenna element 10 and at the second antenna element 15. The time delay for signals received at the third antenna element 20 is not shown for reasons of simplification. The time delay measurements may also be smoothened by the filter 50 after the measurement in the measurement means 60. Figure 5 (a) shows already a first filtered time delay 58 and a second filtered time delay 63. The first filtered time delay 58 relates to the time delay of the signals received at the first antenna element 10 and the second filtered time delay 63 relates to the time delay of the signals received at the second antenna element 15. Figure 5 thereby only shows an example which must not be the result of the multipath transmission according to figure 2 or figure 3.

The signal strength measurement according to figure 5 (b) and the time delay measurement according to figure 5 (a) are related to each other and synchronized as can be seen in figure 5. From the time t = 0 to a fourth time t₄ > t₃ the second filtered time delay 63 is higher than the first filtered time delay 58 and for times t > t₄, the first filtered time delay 58 is higher than the second filtered time delay 63. It would be possible to select an antenna element for transmission from the mobile station 1 to the base station 70 only depending on the measured time delay. Thereby, that antenna element 10, 15, 20 would be selected and activated by the evaluation means 45 for signal transmission having the lowest time delay at signal reception. This means, that the transmission from the mobile station 1 to the base station 70 may be realized in a radiation sector which ensures the shortest transmission way. Therefore, during the time interval from t = 0 to the fourth time t₄ the first radiation sector 25 would be selected and the first antenna element 10 would be activated by the evaluation means 45 for signal transmission to the base station 70. For times t > t₄, the second antenna element 15 would be selected by the evaluation means 45 for signal transmission to the base station 70. Thereby, it is supposed, that the time delay of the third antenna element 20 at signal reception is higher than the time delays of the first antenna element 10 and the second antenna element 15 at signal reception all the time.

Another possibility of antenna element selection for signal transmission is described in the following. Thereby, the antenna element selection for signal transmission is realized only dependent on the measurement of the signal strength unless all differences between two signal strengths of the signals received at the three antenna elements 10, 15, 20 fall below a predetermined signal strength difference 68. For the difference between the third filtered signal strength 48 and the fourth filtered signal strength 53 this would be the case at a fifth time t₅. For times t > t₅, the difference between the third filtered signal strength 48 and the fourth filtered signal strength 53 falls below the predetermined signal strength difference 68. Supposed, that this is the case also for the difference between the third filtered signal strength 48 and the filtered signal strength of the third antenna element 20 at signal reception and for the difference between the fourth filtered signal strength 53 and the filtered signal strength at the third antenna element 20 at signal reception, the antenna element selection for times t > t₅ will be based on the time delay measurement. That means, that for times t > t₅, where the first filtered time delay 58 is higher than the second filtered time delay 63, the second antenna element 15 will be selected by the evaluation means 45 for signal transmission.

If all differences between two time delays of the signals reveived at the three antenna elements 10, 15, 20 fall below a predetermined time delay difference 73 and all differences between two signal strengths of the signals received at the three antenna elements 10, 15, 20 fall below the predetermined signal strength difference 68, the evaluation means 45 would select all antenna elements for signal transmission and therefore providing an omnidirectional radiation pattern. This would be the case for times t later than a sixth time t₆, i.e. for
t > t₆ according to figure 5, supposed that also the difference between the first filtered time delay 58 and the filtered time delay of the third antenna element 20 at signal reception is below the predetermined time delay difference 73 and the difference between the second filtered time delay 63 and the filtered time delay of the third antenna element 20 at signal reception is also below the predetermined time delay 73 for t > t₆.

For times t > t₆ no privileged direction may be determined by the evaluation means 45 such that the best radiation pattern would be the omnidirectional radiation pattern by selecting all antenna elements 10, 15, 20 for signal transmission.

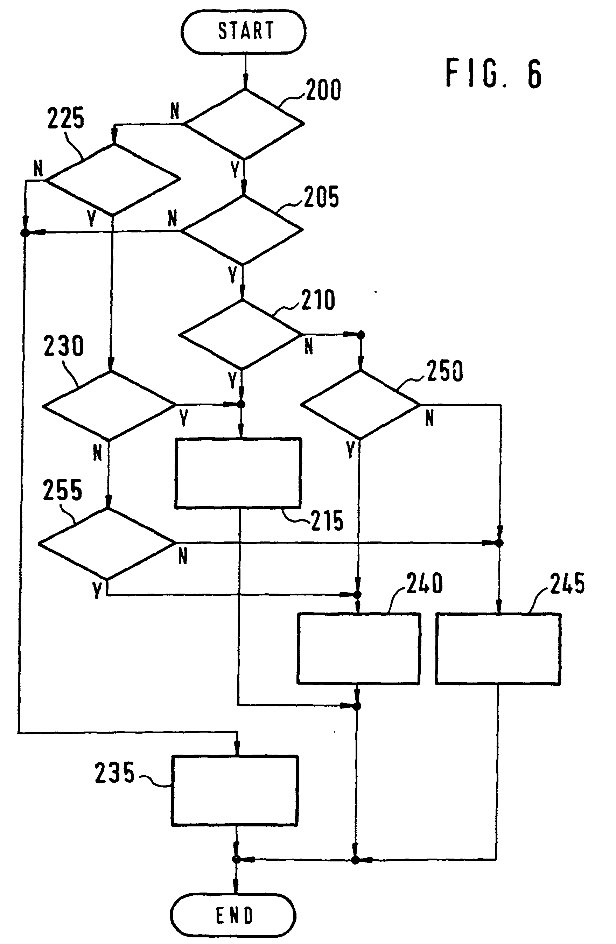

Figure 6 shows an algorithm for the evaluation means 45. At a step 200, the evaluation means 45 determines if at least one difference between two filtered signal strengths of the signals received at the three antenna elements 10, 15, 20 is higher than the predetermined signal strength difference 68. If this is the case, the program branches to a step 205, otherwise it branches to a step 225. At step 205, the evaluation means 45 determines if at least one filtered signal strength is higher than the predetermined signal strength A₁. If this is the case, the program branches to a step 210, otherwise it branches to a step 235. At step 210, the evaluation means 45 determines if the first antenna element 10 has the highest signal strength at signal reception. If this is the case, the program branches to a step 215 otherwise it branches to a step 250. At step 215, the evaluation means 45 selects the first radiation sector 25 and activates the corresponding first antenna element 10 for signal transmission in the first radiation sector 25. Afterwards, the program is left. At step 250, the evaluation means 45 determines, if the second antenna element 15 has the highest signal strength at signal reception. If this is the case, the program branches to a step 240 otherwise it branches to a step 245. At the step 240, the evaluation means 45 selects the second radiation sector 30 and activates the corresponding second antenna element 15 for signal transmission in the second radiation sector 30. Afterwards the program is left. At step 245 the evaluation means 45 selects the third radiation sector 35 and activates the corresponding third antenna element 20 for signal transmission in the third radiation sector 35. Afterwards the program is left. At step 225, the evaluation means 45 determines, if at least one difference between two time delays of the signals received at the three antenna elements 10, 15, 20 is higher than a predetermined time delay difference 73. If this is the case, the program branches to a step 230, otherwise it branches to step 235. At step 230, the evaluation means 45 determines, if the time delay of a signal received from the base station 70 at the first antenna element 10 is less than the time delays of the signals received from the base station 70 at the second antenna element 15 and the third antenna element 20. If this is the case, the program branches to step 215, otherwise it branches to a step 255. At step 255, the evaluation means 45 determines, if the time delay of a signal received from the base station 70 at the second antenna element 15 is less than the time delays of signals received at the first antenna element 10 and the third antenna element 20. If this is the case, the program branches to step 240 otherwise it branches to step 245. At step 235 the evaluation means 45 selects all radiation sectors 25, 30, 35 and activates all antenna elements 10, 15, 20 for signal transmission in all radiation sectors 25, 30 ,35. Afterwards, the program is left.

The invention is described in detail for the use of three antenna elements with different directional radiation patterns. For the realization of the invention it is only required that at least two antenna elements with different directional radiation patterns have to be used, whereby the two directional radiation patterns cover all possible transmission and reception directions. Due to the multipath reception, the signals may be received from the base station 70 in more than one radiation sector but with different signal strengths and time delays. According to the described algorithm in figure 6, the evaluation means 45 may calculate out of the signal strength and the time delay the direction of the best reception of signals from the base station 70 and activate the antenna element for the corresponding radiation sector in which the direction of the best reception of signals from the base station 70 is placed. Signals will then be transmitted to the base station 70 in the selected radiation sector. For the determination of the direction of the best reception of signals from the base station 70 only the signal strength or only the time delay or both signal quality parameters may be used. If the evaluation means 45 estimates a direction or angle of best reception of signals from the base station 70 based upon the measurements of the measurement means 40, whereby the estimated direction is placed at the border between two radiation sectors, it might be feasible that the evaluation means 45 selects these two adjacent radiation sectors and activates the corresponding antenna elements for transmission of signals to the base station 70.

The invention may be implemented for mobile stations used in a GSM-system (Global System for Mobile Communications) or in a UMTS-system (Universal Mobile Telecommunication System) or the like.

## Claims

1. Mobile station (1), especially mobile phone, comprising an antenna arrangement (5), the antenna arrangement (5) being switchable between at least two different radiation patterns, wherein at least two antenna elements (10,15,20) with a directional radiation pattern, respectively, are provided at the antenna arrangement (5), wherein each directional radiation pattern covers a different radiation sector (25, 30 35), wherein for signal reception the at least two antenna elements (10, 15, 20) are activated, wherein measurement means (40) is provided to measure signal quality parameters at each of the at least two antenna elements (10, 15, 20) at signal reception, wherein evaluation means (45) is provided to select at least one radiation sector (25, 30, 35) and to activate the corresponding antenna element (10, 15, 20) for signal transmission in this radiation sector (25, 30, 35) dependent on the measurement of the signal quality parameters at signal reception, **characterized in that** the evaluation means (45) selects all antenna elements ( 10, 15, 20) for signal transmission in case that the measured signal strength at each antenna element (10, 15, 20) at signal reception lies below a predetermined value, especially for a predetermined time.

2. Mobile station (1) according to claim 1, **characterized in that** the measurement means (40) measures as a signal quality parameter the signal strength of the received signal at each receiving antenna element (10, 15, 20) .

3. Mobile station (1) according to claim 1 or 2, **characterized in that** the measurement means (40) measures as a signal quality parameter the time delay of signal reception at each receiving antenna element (10, 15, 20) .

4. Mobile station (1) according to claim 1, 2 or 3, **characterized in that** the evaluation means (45) selects an antenna element (10, 15, 20) for signal transmission having the highest signal strength at signal reception.

5. Mobile station (1) according to anyone of the preceding claims, **characterized in that** the evaluation means (45) selects an antenna element (10, 15, 20) for signal transmission having the lowest time delay at signal reception.

6. Mobile station (1) according to anyone of the preceding claims, **characterized in that** the evaluation means (45) selects all antenna elements (10, 15, 20) for signal transmission in case that the difference between the measured time delays at the antenna elements (10, 15, 20) at signal reception lies below a predetermined value, especially for a predetermined time.

7. Mobile station (1) according to anyone of the preceding claims, **characterized in that** a filter (50) is provided for smoothing the measured signal strengths and/or time delays at signal reception.

## Patentansprüche

1. Mobilstation (1), besonders ein Mobiltelefon, mit einer Antennenanordnung (5), die zwischen mindestens zwei verschiedenen Strahlungsdiagrammen umschaltbar ist, wobei mindestens zwei Antennenelemente (10, 15, 20) jeweils mit einem Richtstrahlungsdiagramm an der Antennenanordnung (5) vorgesehen sind, wobei jedes Richtstrahlungsdiagramm einen unterschiedlichen Strahlungssektor (25, 30, 35) abdeckt, wobei zu dem Signalempfang die mindestens zwei Antennenelemente (10, 15, 20) aktiviert werden, wobei Meßmittel (40) vorgesehen sind, um Signalgüteparameter an jedem der mindestens zwei Antennenelemente (10, 15, 20) bei Signalempfang zu messen, wobei Auswertungsmittel (45) vorgesehen sind, um mindestens einen Strahlungssektor (25, 30, 35) auszuwählen und um das entsprechende Antennenelement (10, 15, 20) zur Signalübertragung in diesem Strahlungssektor (25, 30, 35) in Abhängigkeit von der Messung der Signalgüteparameter bei Signalempfang zu aktivieren, **dadurch gekennzeichnet, daß** das Auswertungsmittel (45) alle Antennenelemente (10, 15, 20) zur Signalübertragung auswählt, sollte die gemessene Signalstärke an jedem Antennenelement (10, 15, 20) bei Signalempfang unter einem vorbestimmten Wert liegen, besonders für eine vorbestimmte Zeit.

2. Mobilstation (1) nach Anspruch 1, **dadurch gekennzeichnet, daß** das Meßmittel (40) die Signalstärke des Empfangssignals an jedem empfangenden Antennenelement (10, 15, 20) als ein Signalgüteparameter mißt.

3. Mobilstation (1) nach Anspruch 1 oder 2, **dadurch gekennzeichnet, daß** das Meßmittel (40) die Zeitverzögerung des Signalempfängs an jedem empfangenen Antennenelement (10, 15, 20) als ein Signalgüteparameter mißt.

4. Mobilstation (1) nach Anspruch 1, 2 oder 3, **dadurch gekennzeichnet, daß** das Auswertungsmittel (45) für die Signalübertragung ein Antennenelement (10, 15, 20) mit der höchsten Signalstärke bei Signalempfang auswählt.

5. Mobilstation (1) nach einem beliebigen der vorhergehenden Ansprüche, **dadurch gekennzeichnet, daß** das Auswertungsmittel (45) für die Signalübertragung ein Antennenelement (10, 15, 20) mit der geringsten Zeitverzögerung bei Signalempfang auswählt.

6. Mobilstation (1) nach einem beliebigen der vorhergehenden Ansprüche, **dadurch gekennzeichnet, daß** das Auswertungsmittel (45) alle Antennenelemente (10, 15, 20) zur Signalübertragung auswählt, sollte der Unterschied zwischen den gemessenen Zeitverzögerungen an den Antennenelementen (10, 15, 20) bei Signalempfang unter einem vorbestimmten Wert liegen, besonders für eine vorbestimmte Zeit.

7. Mobilstation (1) nach einem beliebigen der vorhergehenden Ansprüche, **dadurch gekennzeichnet, daß** ein Filter (50) zum Glätten der gemessenen Signalstärken und/oder Zeitverzögerungen bei Signalempfang vorgesehen ist.

## Revendications

1. Station mobile (1), spécialement téléphone mobile, comprenant un agencement d'antennes (5), l'agencement d'antennes (5) étant commutable entre au moins deux différents schémas de rayonnement, dans lequel au moins deux éléments constituant des antennes (10, 15, 20) ayant un schéma directionnel de rayonnement, respectivement, sont prévus dans l'agencement d'antennes (5), chaque schéma directionnel de rayonnement couvre un différent secteur de rayonnement (25, 30, 35), les aux moins, deux éléments constituant des antennes (10, 15, 20) sont activés pour la réception des signaux, dans lequel un moyen de mesure (40) est prévu pour mesurer les paramètres de qualité des signaux de chacun des au moins deux éléments constituant des antennes (10, 15, 20) à la réception des signaux, un moyen d'évaluation (45) est prévu pour sélectionner au moins un secteur de rayonnement (25, 30, 35) et pour activer l'élément (10, 15, 20) correspondant constituant une antenne, pour la transmission des signaux dans ce secteur de rayonnement (25, 30, 35) en fonction de la mesure des paramètres de qualité des signaux à la réception des signaux,
**caractérisée en ce que**
le moyen d'évaluation (45) sélectionne tous les éléments constituant des antennes (10, 15, 20) pour la transmission des signaux dans le cas où l'intensité mesurée du signal sur chaque élément constituant une antenne (10, 15, 20) à la réception du signal se situe en dessous d'une valeur prédéterminée, spécialement pendant un temps prédéterminé.

2. Station mobile (1) selon la revendication 1,
**caractérisée en ce que**
le moyen de mesure (40) mesure, comme paramètre de qualité d'un signal, l'intensité du signal reçu sur chaque élément récepteur constituant une antenne ( 10, 15, 20).

3. Station mobile (1) selon la revendication 1 ou 2,
**caractérisée en ce que**
le moyen de mesure (40) mesure, comme paramètre de qualité d'un signal, la temporisation de la réception du signal sur chaque élément récepteur constituant une antenne (10, 15, 20).

4. Station mobile (1) selon la revendication 1, 2 ou 3,
**caractérisée en ce que**
le moyen d'évaluation (45) sélectionne un élément constituant une antenne (10, 15, 20), pour la transmission d'un signal, ayant l'intensité la plus élevée de signal à la réception du signal.

5. Station mobile (1) selon l'une quelconque des revendications précédentes, **caractérisée en ce que**
le moyen d'évaluation (45) sélectionne un élément constituant une antenne (10, 15, 20), pour la transmission d'un signal ayant la temporisation la plus faible à la réception du signal.

6. Station mobile (1) selon l'une quelconque des revendications précédentes, **caractérisée en ce que**
le moyen d'évaluation (45) sélectionne tous les éléments constituant des antennes (10, 15, 20) pour la transmission d'un signal dans le cas où la différence entre les temporisations mesurées sur les éléments constituant des antennes (10, 15, 20) à la réception du signal se situe en dessous d'une valeur prédéterminée, spécialement pendant un temps prédéterminé.

7. Station mobile (1) selon l'une quelconque des revendications précédentes, **caractérisée en ce qu'**
un filtre (50) est prévu pour lisser les intensités mesurées des signaux et/ou les temporisations à la réception des signaux.
